# FASCICULE DE BREVET EUROPEEN

(11) **EP 2 990 268 B1**
(45) Date de publication et mention de la délivrance du brevet: **10.05.2017**
(21) Numéro de dépôt: 15178272.9
(22) Date de dépôt: 24.07.2015
(51) Int. Cl.: B60R 7/04

(54) **ÉLÉMENT DE RANGEMENT MOBILE MUNI D'UN DOUBLE MECANISME DISPOSE SOUS LE PAVILLON D'UN VEHICULE**
MOBILES ORDNUNGSELEMENT, DAS MIT EINEM DOPPELMECHANISMUS AUSGESTATTET UND UNTER EINEM FAHRZEUGDACH ANGEBRACHT IST
MOBILE STORAGE ELEMENT PROVIDED WITH A DUAL MECHANISM ARRANGED UNDER THE ROOF OF A VEHICLE

(30) Priorité: 29.08.2014 FR 1458107
(43) Date de publication de la demande: 02.03.2016
(73) Titulaire: Peugeot Citroen Automobiles S.A., 78140 Vélizy Villacoublay (FR)
(72) Inventeur: VAZQUEZ, RUBEN, E-36400 PORRINO (PONTEVEDRA) (ES); VENTOSINOS, VANESSA, E-36400 PORRINO (PONTEVEDRA) (ES); ROUSSEAU, FREDERIC, 28320 Gallardon (FR)

(56) Documents cités:
- FR-A1- 2 872 114
- FR-A1- 2 917 031
- JP-U- S59 110 745
- US-A- 3 534 892

## Description

L'invention se situe dans le domaine de l'aménagement intérieur de véhicules de type breaks ou utilitaires en proposant un élément de rangement suspendu déplaçable mécaniquement sous le pavillon permettant de stocker des objets divers sans encombrer le plancher de chargement du coffre.

Les habitacles des véhicules doivent offrir aux utilisateurs des espaces de rangement suffisamment grands pour permettre de transporter des objets plus ou moins encombrants. Les espaces susceptibles d'être disponibles pour créer des zones de rangement dans l'habitacle d'un véhicule sont peu nombreux. Par conséquent, concevoir des zones de rangement dans l'espace sous le pavillon paraît être un bon compromis, pour proposer un compartiment de rangement le plus important possible tout en garantissant une sécurité optimale à ses utilisateurs en contenant le chargement de rangement de sorte à ce qu'il ne s'éjecte pas de manière intempestive dans l'habitacle.

Le document FR2917031, qui correspond au préambule de la revendication 1, décrit l'habitacle d'un véhicule comportant un siège avant et un siège arrière surmontés par un pavillon comprenant un module de rangement monté pivotant autour d'un axe par rapport au pavillon depuis une position inactive de rangement dans laquelle le dit module est au-dessus du siège arrière, jusqu'à une position active d'utilisation, dans laquelle il est situé à proximité du siège arrière en étant accessible à l'occupant de ce siège. Le document JP S59110745 décrit un élément de rangement fixé sur la traverse avant du pavillon à l'aide de quatre biellettes articulée sur les parois latérales de l'élément de rangement de forme parallélépipédique. Un ressort hélicoïdal est arrimé à une extrémité sur le corps longitudinal de la bielle et à l'autre extrémité désaxé par rapport au point de pivotement de la bielle sur le pavillon de manière à exercer une force de traction en position haute pour maintenir l'élément de rangement en position suspendue. En position basse de l'élément de rangement, le ressort se superpose à l'axe de la bielle et permet à l'élément de rangement de se maintenir en position basse.

Le document FR2872114 montre un exemple d'un agencement pour la fixation d'un élément de rangement qui a la forme uniquement d'un casier sans couvercle. L'élément de rangement est positionné sous un pavillon d'un habitacle de véhicule automobile et pour l'accès au dit élément de rangement, dans lequel l'élément de rangement comporte au moins une face par laquelle un utilisateur peut avoir accès à l'intérieur dudit élément de rangement et au moins deux parois opposées s'étendant entre deux extrémités de l'élément de rangement, qui portent deux paires de tourillons pour proposer au moins une configuration de rangement de l'élément de rangement dans laquelle les paires de tourillons occupent une position étendue, et une configuration d'accès à l'intérieur de l'élément dans laquelle une seule paire de tourillons occupe la position étendue pour permettre de basculer l'élément de rangement afin d'y accéder. L'élément de rangement du fait des tourillons placés dans des orifices est difficile à positionner, et de plus pour accéder au rangement, l'utilisateur doit l'abaisser en le faisant tourner autour de son axe arrière ce qui oriente le fond du rangement dans une position oblique importante. On comprend que les objets déposés vont glisser tout en désordre vers la bordure du bas, voire chuter du rangement. Par conséquent, ce mode de rangement n'est pas idéal ni satisfaisant car il ne permet pas un rangement ordonné et une manipulation de l'élément de rangement pas évidente par l'utilisateur. Cet élément de rangement est également extractible mais la manipulation des tourillons situés à l'arrière n'est pas aisée par l'utilisateur. De plus, l'élément de rangement est monté sur des rails accolés au pavillon, par l'intermédiaire des tourillons, ce qui augmente l'encombrement vertical par rapport au pavillon de l'agencement de l'élément de rangement et pénalise la visibilité par la lunette arrière du véhicule.

L'invention a pour objectif de résoudre les problèmes rencontrés dans l'art antérieur en proposant un nouvel agencement d'un élément de rangement fermé en position de remisage dont l'accès est facilité, en position d'usage, en abaissant l'élément de rangement et en conservant une position parallèle au plancher de chargement, tout en facilitant l'accès à l'utilisateur et en réduisant la hauteur de remisage sous le pavillon afin de pas gêner la visibilité par la lunette arrière du véhicule.

A cet effet l'invention propose un élément de rangement mobile, installé sous un pavillon comprenant un contenant fermé, au-dessus du plancher de chargement de l'habitacle d'un véhicule, et pour l'accès au dit contenant au moins une face par laquelle un utilisateur peut parvenir à l'intérieur dudit contenant, le contenant étant déplacé par un double mécanisme comportant des flasques placées parallèlement au contenant, le double mécanisme comportant deux paires de bielles inférieure et supérieure montées en parallèles, et en ce que les bielles sont montées pivotantes décalées sur des axes à une de leur extrémité, solidaires des flasques et à l'autre extrémité, les bielles sont montée pivotante directement sur des axes liés du contenant (2), de plus la bielle inférieure est prolongée d'une platine (19) qu'elle entraîne en rotation.

Avantageusement, le double mécanisme est fixé par l'intermédiaire de pattes solidaire des flasques à la traverse avant et à la traverse arrière.

Selon un mode de réalisation préféré de l'invention, le double mécanisme comporte un vérin à gaz assurant l'équilibrage du contenant pour faciliter son déplacement, montés tournant à une extrémité dans le flasque et à l'autre extrémité montés tournant sur la mi-hauteur du flanc de la bielle la plus éloignée.

Selon une variante, le double mécanisme comporte un moyen de blocage en position rangée.

Avantageusement, le double mécanisme comporte un moyen de blocage en position d'utilisation.

Selon une variante, les moyens de blocages sont déverrouillés en actionnant une manette placée à l'avant du contenant.

Selon une autre variante, le moyen de blocage en position rangée est un crochet monté pivotant venant en prise sur une tige solidaire du flasque du double mécanisme.

De manière optionnelle, le moyen de blocage en position d'utilisation est une tige de section carrée chanfreinée à l'extrémité venant en prise dans une ouverture carrée de la platine coopérant avec une bielle.

L'invention sera bien comprise et d'autres aspects et avantages apparaîtront clairement à la lecture de la description qui suit, donnée à titre d'exemple par rapport aux figures annexées sur lesquelles :
- La figure 1 présente une vue de profil de l'agencement d'un élément de rangement de pavillon montré en position de remisage, dans une partie arrière de la structure de l'habitacle d'un véhicule placé au-dessus du tendelet destiné à masquer l'espace de chargement placé au-dessus du plancher de chargement, selon l'invention ;
- La figure 2 présente une vue de profil de l'agencement d'un élément de rangement de pavillon montré en position d'utilisation, dans une partie arrière de la structure de l'habitacle d'un véhicule, selon l'invention ;

- La figure 3 présente une vue en perspective de l'agencement d'un élément de rangement de pavillon montré en position dépliée d'utilisation, extrait de la partie arrière de la structure de l'habitacle d'un véhicule, selon l'invention ;
- La figure 4 présente une vue de face des moyens mécaniques repliés de l'agencement d'un élément de rangement, selon l'invention ;
- La figure 5 présente une vue partielle agrandie en perspective du moyen de blocage du contenant en position remisée, selon l'invention ;
- La figure 6 présente une vue partielle agrandie en perspective du moyen de blocage du contenant en position d'utilisation, selon l'invention ;
- La figure 7 présente une vue partielle agrandie arrière du moyen de blocage du contenant en position d'utilisation, selon l'invention.

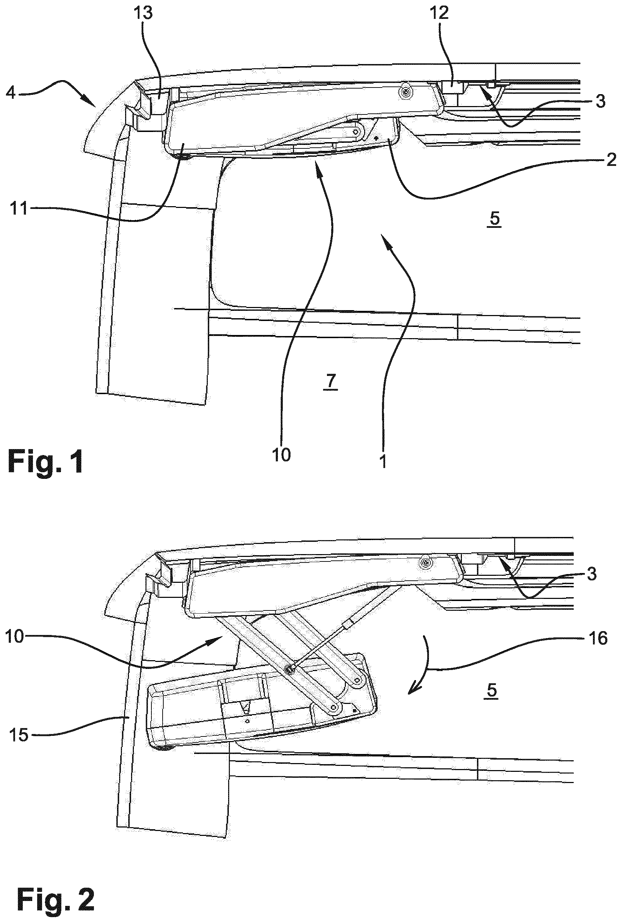

La figure 1 présente une vue de profil de l'agencement d'un élément de rangement 1 de pavillon 3 montré en position de remisage, dans une partie arrière de la structure 4 de l'habitacle 5 d'un véhicule placé au-dessus du tendelet destiné à masquer l'espace de chargement 7 placé au-dessus du plancher de chargement, selon l'invention. L'élément de rangement 1 comporte un contenant 2 qui est dans sa position de remisage placé au plus près de la surface du pavillon 3. Le contenant 2 est actionné par un double mécanisme 10, replié dans les flasques 11, fixées sur la traverse avant 12 et arrière 13. Le contenant 2 a la forme générale d'un casier rectangulaire comportant un fond et quatre parois périphériques. De plus, il comporte une ouverture transversale qui sera décrite plus loin. Comme cela est visible sur la figure, l'élément de rangement 2 en position de remisage et placé au plus près du pavillon 3 et n'est pas accessible par l'utilisateur. Avantageusement, sa position de remisage ne réduit pas la visibilité de l'intérieur vers l'extérieur du véhicule par la lunette arrière. En effet, la hauteur du contenant 2 est inférieure à la hauteur de l'encadrement 14 supérieur du hayon. Dans sa position de remisage, des moyens de verrouillage sont prévus pour le maintenir et éviter tous déplacements intempestifs.

La figure 2 présente une vue de profil de l'agencement d'un élément de rangement 1 de pavillon 3 montré en position d'utilisation, dans une partie arrière de l'habitacle 5 d'un véhicule, selon l'invention. Avant de déplier le contenant 2 à l'aide du double mécanisme 10 replié dans les flasques 11, il convient d'escamoter le tendelet, dans le cas de cette configuration, car le contenant 2 pourrait heurter le tendelet dans son évolution. Sur la figure, le double mécanisme 10 assurant le déplacement du contenant 2 a été actionné, de manière à placer le contenant 2 éloigné du pavillon 3. Du fait de cette manipulation, le contenant 2, passe d'une position de remisage accolée contre le pavillon 3, à une position d'utilisation où il est placé dans une position basse et partiellement extrait de l'habitacle 5, quand le hayon du véhicule est relevé, à la portée de l'usager. Sur la figure, le contenant 2 se déplace sensiblement horizontalement suivant la flèche 16, jusqu'à s'extraire partiellement à travers l'ouverture 15 du véhicule, pour le confort de l'utilisateur.

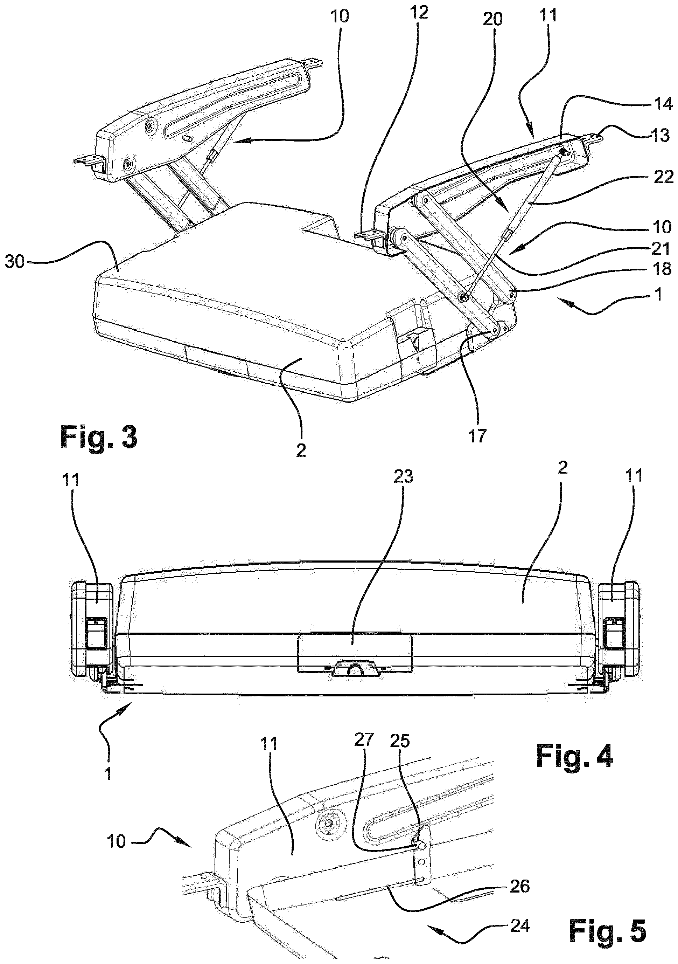

La figure 3 présente une vue en perspective de l'agencement d'un élément de rangement 1 de pavillon montré en position dépliée d'utilisation, extrait de la partie arrière de la structure de l'habitacle d'un véhicule, selon l'invention. L'élément de rangement 1 comprend un contenant 2 muni d'un couvercle 30 et d'un double mécanisme 10. Le double mécanisme 10 est composé de deux mécanismes identiques placés symétriquement suivant l'axe longitudinale du véhicule, et latéralement au contenant 2. De cette façon, le contenant 2 est parfaitement équilibré lors de sa manutention. Pour faciliter la description, un seul mécanisme 10 sera décrit. Le mécanisme 10 est constitué d'un flasque 11 possédant une structure allongée en forme de cadre sensiblement rectangulaire. La flasque 11 comporte deux pattes 12, 13 à chacune de ses extrémités pour sa fixation sur les traverses avant et arrière du véhicule. La flasque 11 comporte un bord 14 périphérique non refermé sur lui-même, de manière à permettre le passage des éléments du mécanisme en position déployée. En position de remisage, les éléments du mécanisme 10 sont complétement repliés dans la flasque 11. Des bielles inférieure 17, et supérieure 18 sont montées rotatives à une extrémité sur des axes solidaires de la flasque 11. Elles sont placées à proximité de l'avant du flasque 11 et parallèles entre elles de manière à se déformer sous forme d'un parallélogramme. L'autre extrémité des bielles 17, 18 est fixée directement sur des axes solidaires du contenant 2 et la bielle inférieure 17 est prolongée par une platine 19, qu'elle entraîne en rotation. Les deux bielles 17, 18 se déforment suivant un parallélogramme régulier, lors du déplacement du contenant 2. Un vérin à gaz 20 est monté dans un plan parallèle aux bielles 17, 18, est prévu pour équilibrer le contenant 2 et le déplacer sans effort. L'extrémité de la tige 21 du vérin 20 est fixée en liaison pivot à l'intérieur et à l'arrière du flasque 11, tandis que l'extrémité du corps 22 du vérin 20 est fixée à mi-hauteur sur le bord de la bielle 17 le plus éloigné de la liaison pivot de la tige 21 du vérin 20. En position repliée, les bielles inférieure 17, et supérieure 18 sont superposées dans une position horizontale et intégralement logées dans la flasque 11. Ainsi, le double mécanisme 10 permet une manoeuvre aisée et équilibrée du contenant 2 par l'utilisateur.

La figure 4 présente une vue de face du contenant 2 et des moyens mécaniques 10 repliés de l'agencement d'un élément de rangement 1. Le contenant 2 est disposé entre les deux flasques 11 constitutifs du double mécanisme 10. L'encombrement en hauteur est réduit et la hauteur des flasques 11 est inférieure à la hauteur du contenant 2. Dans cette position, le contenant 2 est verrouillé. Pour le déverrouiller, il suffit d'actionner la manette 23.

La figure 5 présente une vue partielle agrandie en perspective du moyen de maintien 24 depuis l'intérieur du contenant 2 en position remisée. Dans ce but, la flasque 11 comporte une tige 24 montée en saillie sur laquelle l'armature 27 d'un crochet 25 est montée pivotante sur le bord du contenant 2 et le crochet 25 vient en prise sur la tige 24 solidaire du flasque 11 du double mécanisme 10. A l'autre extrémité de l'armature 27, une ouverture permet le raccordement d'une tringlerie 26 montée libre reliée à la manette 23, pour son déverrouillage. Le verrouillage étant effectué automatiquement par glissement de l'extrémité de l'armature 25 sur la tige 24 et d'un rappel élastique permettant au crochet 25 de venir en prise sur l'axe 24.

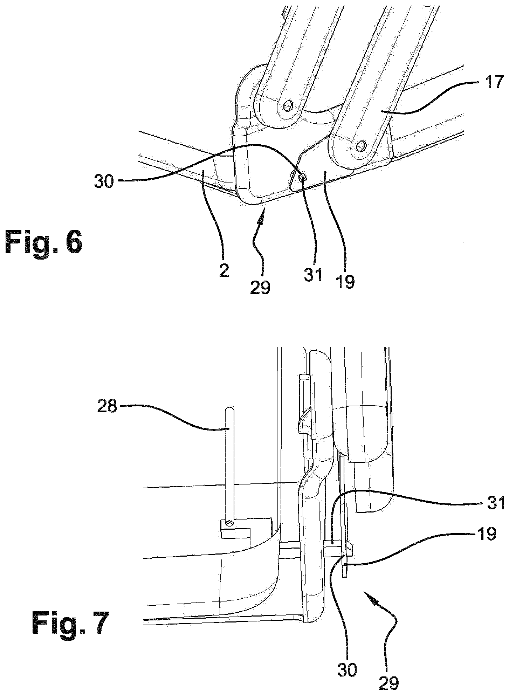

La figure 6 présente une vue partielle agrandie en perspective du moyen de blocage 29 du contenant 2 en position d'utilisation, de la figure 3. La platine 19 est entrainée en rotation par la bielle 17 jusqu'à ce que l'ouverture 30 de la platine 19 se trouve en correspondance avec le doigt 31 monté coulissant avec un mécanisme approprié dans la structure du contenant 2 pour se verrouiller automatiquement.

La figure 7 présente une vue partielle agrandie arrière du moyen de blocage 30 du contenant 2 en position d'utilisation, verrouillé par le doigt 27, relié à une tringlerie 28, elle-même lié à la manette. Le doigt 27 est introduit dans l'ouverture de la platine 19 et bloque le mécanisme 10 en empêchant tout mouvement de la bielle 17. Le déverrouillage du contenant 2 est réalisé en actionnant la manette située sur la façade du contenant 2.

## Revendications

1. Agencement d'un élément de rangement (1) mobile, installé sous un pavillon (3) comprenant un contenant fermé (2), au-dessus du plancher de chargement de l'habitacle (5) d'un véhicule, et pour l'accès au dit contenant (2) au moins une face par laquelle un utilisateur peut parvenir à l'intérieur dudit contenant (2), le contenant (2) étant déplacé par un double mécanisme (10) comportant des flasques (11) placées parallèlement au dit contenant (2), **caractérisé en ce que** le double mécanisme (10) comporte deux paires de bielles (17, 18) inférieure et supérieure montées en parallèles, et **en ce que** les bielles inférieure (17) et supérieure (18) sont montées pivotantes décalées sur des axes à une de leur extrémité, solidaires des flasques (11) et à l'autre extrémité, les bielles inférieure (17) et supérieure (18) sont montées pivotantes directement sur des axes liés du contenant (2), de plus la bielle inférieure (17) est prolongée d'une platine (19) qu'elle entraîne en rotation.

2. Agencement d'un élément de rangement (1) selon la revendication 1, **caractérisé en ce que** le double mécanisme (10) est fixé par l'intermédiaire de pattes solidaires des flasques (11) à la traverse avant (12) et à la traverse arrière (13).

3. Agencement d'un élément de rangement (1) selon la revendication 2, **caractérisé en ce que** le double mécanisme (10) comporte un vérin à gaz (20) assurant l'équilibrage du contenant (2) pour faciliter son déplacement monté tournant à une extrémité dans le flasque (11) et à l'autre extrémité montée tournant sur la mi-hauteur du flanc de la bielle (17) la plus éloignée.

4. Agencement d'un élément de rangement (1) selon l'une quelconque des revendications 1 à 3, **caractérisé en ce que** le double mécanisme (10) comporte un moyen de maintien (24) en position rangée.

5. Agencement d'un élément de rangement (1) selon l'une quelconque des revendications 1 à 4, **caractérisé en ce que** le double mécanisme (10) comporte un moyen de blocage (29) en position d'utilisation.

6. Agencement d'un élément de rangement (1) selon l'une quelconque des revendications 4 ou 5, **caractérisé en ce que** le moyen de maintien (24) et le moyen de blocage (29) sont déverrouillés en actionnant une manette (23) placée à l'avant du contenant (2).

7. Agencement d'un élément de rangement (1) selon la revendication 4, **caractérisé en ce que** le moyen de maintien (24) en position rangée est un crochet (25) monté pivotant venant en prise sur une tige (31) solidaire du flasque (11) du double mécanisme (10).

8. Agencement d'un élément de rangement (1) selon la revendication 5, **caractérisé en ce que** le moyen de blocage (29) en position d'utilisation est une tige (31) de section carrée chanfreinée à l'extrémité venant en prise dans une ouverture carrée (30) de la platine (19) coopérant avec la bielle inférieure (17).

## Patentansprüche

1. Anordnung eines mobilen Ordnungselements (1), das unter einem Dach (3) installiert ist, das einen geschlossenen Behälter (2) umfasst, oberhalb des Ladefußbodens des Fahrgastraums (5) eines Fahrzeugs, und für den Zugang zu dem Behälter (2) mindestens eine Seite, über die ein Benutzer zu dem Inneren des Behälters (2) gelangen kann, wobei der Behälter (2) von einem Doppelmechanismus (10) verlagert wird, der Flansche (11) umfasst, die parallel zu dem Behälter (2) platziert sind, **dadurch gekennzeichnet, dass** der Doppelmechanismus (10) zwei Paare von Schubstangen (17, 18), eine untere und eine obere, die parallel montiert sind, umfasst, und dass die untere Schubstange (17) und die obere Schubstange (18) schwenkend versetzt auf Achsen an einem ihrer Enden fest mit den Flanschen (11) verbunden montiert sind, und an dem anderen Ende die untere Schubstange (17) und die obere Schubstange (18) schwenkend direkt auf Achsen, die mit dem Behälter (2) verbunden sind, montiert sind, wobei die untere Schubstange (17) mit einer Platte (19), die sie in Drehung antreibt, verlängert ist.

2. Anordnung eines Ordnungselements (1) nach Anspruch 1, **dadurch gekennzeichnet, dass** der elektromagnetischer Setup Big unser befestigt ist, die fest mit Flanschen (11) an dem vorderen Querträger (12) und dem hinteren Querträger (13) verbunden sind.

3. Anordnung eines Ordnungselements (1) nach Anspruch 2, **dadurch gekennzeichnet, dass** der Doppelmechanismus (10) einen Gaszylinder (20) umfasst, der das Gleichgewicht des Behälters (2) sicherstellt, um sein Verlagern an einem Ende in dem Flansch (11) drehend montiert und an dem anderen Ende auf halber Höhe der Flanke der Schubstange (17), die am weitesten entfernt ist, drehend montiert sicherstellt.

4. Anordnung eines Ordnungselements (1) nach einem der Ansprüche 1 bis 3, **dadurch gekennzeichnet, dass** der Doppelmechanismus (10) ein Mittel zum Halten (24) in verstauter Position umfasst.

5. Anordnung eines Ordnungselements (1) nach einem der Ansprüche 1 bis 4, **dadurch gekennzeichnet, dass** der Doppelmechanismus (10) ein Mittel (29) zum Blockieren in Gebrauchsposition umfasst.

6. Anordnung eines Ordnungselements (1) nach einem der Ansprüche 4 oder 5, **dadurch gekennzeichnet, dass** das Mittel (24) zum Halten und das Mittel (29) zum Blockieren durch Betätigen eines Griffs (23), der an der Vorderseite des Behälters (2) platziert ist, entriegelt werden.

7. Anordnung eines Ordnungselements (1) nach Anspruch 4, **dadurch gekennzeichnet, dass** das Mittel (24) zum Halten in verstauter Position ein Haken (25) ist, der schwenkend montiert ist und in Eingriff auf einem Schaft (31), der mit dem Flansch (11) des Doppelmechanismus (10) fest verbunden ist, kommt.

8. Anordnung eines Ordnungselements (1) nach Anspruch 5, **dadurch gekennzeichnet, dass** das Mittel (29) zum Blockieren in Gebrauchsposition ein Schaft (31) mit abgefastem quadratischem Querschnitt mit Ende ist, das in Eingriff in eine quadratische Öffnung (30) der Platte (19), die mit der unteren Schubstange (17) zusammenwirkt, kommt.

## Claims

1. An arrangement of a mobile storage element (1), installed under a roof (3) including a closed container (2), above the load floor of the passenger compartment (5) of a vehicle, and for access to said container (2) at least one face by which a user can reach the interior of said container (2), the container (2) being moved by a dual mechanism (10) comprising flanges (11) placed parallel to said container (2), **characterized in that** the dual mechanism (10) comprises two pairs of connecting rods (17, 18), upper and lower, mounted in parallel, and **in that** the lower (17) and upper (18) connecting rods are pivotally mounted in an offset manner on axes at one of their ends, integral with the flanges (11), and at the other end, the lower (17) and upper (18) connecting rods are pivotally mounted directly on axes linked to the container (2), in addition the lower connecting rod (17) is extended by a plate (19) which it drives in rotation.

2. The arrangement of a storage element (1) according to Claim 1, **characterized in that** the dual mechanism (10) is fixed by means of lugs integral with the flanges (11) to the front cross member (12) and to the rear cross member (13).

3. The arrangement of a storage element (1) according to Claim 2, **characterized in that** the dual mechanism (10) comprises a gas strut (20) ensuring the balancing of the container (2) to facilitate its movement, rotatably mounted at one end in the flange (11) and at the other end rotatably mounted at mid-height of the flank of the most remote connecting rod (17).

4. The arrangement of a storage element (1) according to any one of Claims 1 to 3, **characterized in that** the dual mechanism (10) comprises a means (24) for retaining in stored position

5. The arrangement of a storage element (1) according to any one of Claims 1 to 4, **characterized in that** the dual mechanism (10) comprises a means (29) for locking in position of use.

6. The arrangement of a storage element (1) according to any one of Claims 4 or 5, **characterized in that** the retaining means (24) and the locking means (29) are unlocked by actuating a lever (23) placed at the front of the container (2).

7. The arrangement of a storage element (1) according to Claim 4, **characterized in that** the means (24) for retaining in stored position is a hook (25), pivotally mounted, engaging on a rod (31) integral with the flange (11) of the dual mechanism (10).

8. The arrangement of a storage element (1) according to Claim 5, **characterized in that** the locking means (29) in position of use is a rod (31) of square cross-section, chamfered at the end engaging in a square opening (30) of the plate (19) cooperating with the lower connecting rod (17).
